# FASCICULE DE BREVET EUROPEEN

(11) **EP 0 608 155 B1**
(45) Date de publication et mention de la délivrance du brevet: **16.07.1997**
(21) Numéro de dépôt: 94400017.3
(22) Date de dépôt: 04.01.1994
(51) Int. Cl.: B60T 7/06

(54) **Agencement d'une pédale de frein de véhicule comportant des moyens de réglage de sa position de repos**
Anordnung eines Fahrzeugbremspedals mit Mitteln zum Einstellen seiner Ruhelage
Arrangement for a vehicle brake pedal with means for setting its rest position

(30) Priorité: 20.01.1993 FR 9300536
(43) Date de publication de la demande: 27.07.1994
(73) Titulaire: AUTOMOBILES PEUGEOT, 75116 Paris (FR); AUTOMOBILES CITROEN, 92200 Neuilly-sur-Seine (FR)
(72) Inventeur: Leroy, Philippe, F-25200 Montbeliard (FR)
(74) Mandataire: Polus, Camille

(56) Documents cités:
- DE-A- 3 307 888
- DE-C- 1 163 163
- DE-U- 6 933 099
- DE-U- 8 618 937
- FR-A- 2 459 744
- US-A- 3 678 779

## Description

La présente invention concerne un agencement pour l'actionnement d'un mécanisme au moyen d'un levier du deuxième type, notamment au moyen d'une pédale.

L'invention concerne plus particulièrement un agencement pour l'actionnement d'un mécanisme appartenant à un système de freinage au moyen d'une pédale de frein dont le levier de pédale est monté pivotant sur un axe fixe du châssis au voisinage de son extrémité supérieure et dont l'extrémité inférieure comporte une plaque de poussée agencée à l'intérieur de l'habitacle du véhicule et sur laquelle agit le pied du conducteur.

On connaît un agencement de ce type dans lequel le levier de pédale monté pivotant autour d'un axe fixe transforme la force motrice appliquée à l'extrémité libre du levier en un mouvement de translation du mécanisme selon une direction sensiblement perpendiculaire à l'axe de pivotement du levier, la partie médiane du corps du levier étant reçue entre deux flasques reliés à un organe d'entrée du mécanisme.

Selon une première conception connue, la partie médiane du corps du levier est montée en chape entre les deux flasques et elle est traversée par un axe transversal fixe qui s'étend entre les flasques.

DE-U-69 33 099 décrit un agencement selon le préambule de la revendication 1 et selon cette première conception dans laquelle l'axe transversal forme excentrique.

Selon une seconde conception décrite et représentée dans le document FR-A-2.459.744, le bord avant de la partie médiane du levier de pédale agit sur une surface d'actionnement constituée par une douille montée sur un axe transversal fixe qui s'étend entre les flasques, le bord avant du levier comportant un profil particulier qui permet d'obtenir un bras de levier variable au cours de la phase d'actionnement du mécanisme.

La conception en grande série des véhicules automobiles équipés d'un pédalier comportant au moins une pédale de frein et une pédale d'accélérateur aboutit à une position ergonomique moyenne de la pédale de frein par rapport à la pédale d'accélérateur qui correspond à une morphologie moyenne type d'un conducteur.

Une telle conception ne permet pas de prendre en compte les cas extrêmes de dimensions des pieds du conducteur, et notamment les petites et les grandes pointures, ni le type de chaussures utilisées.

L'adoption d'une valeur de compromis pour le réglage de la position de repos de la pédale de frein conduit ainsi à des difficultés de manoeuvre de la pédale de frein lorsque celle-ci est trop éloignée de la pédale d'accélérateur, ainsi qu'à une position peu confortable du pied et de la jambe du conducteur lors de la phase de freinage, soit du fait d'une trop forte extension du pied si celui-ci est de petite taille, soit du fait d'un saut et d'un angle de la cheville trop important lorsque le pied est de grande taille.

La présente invention a pour but de proposer un agencement permettant de régler la position de repos de la pédale de frein en fonction de la morphologie du conducteur, aucune des conceptions mentionnées précédemment ne permettant de résoudre ce problème.

Dans ce but, l'invention propose un agencement du type mentionné précédemment, tel que défini par la revendication 1.

Selon d'autres caractéristiques de l'invention :
- le dispositif d'indexation comporte une bille d'indexation sollicitée en appui contre le contour de la came par un ressort de compression monté dans un trou borgne de l'organe d'entrée ;
- l'axe du trou borgne est sensiblement parallèle à la direction de translation de l'organe d'entrée ;
- l'agencement comporte des moyens pour solliciter élastiquement le bord avant du corps du levier en appui contre la surface d'actionnement ;
- les moyens de sollicitation du levier comportent un ressort de compression dont une première extrémité coopère avec la portion en vis-à-vis du bord arrière du levier et dont la seconde extrémité prend appui contre une pièce de butée reliée aux deux flasques ;
- une bille est interposée entre la première extrémité du ressort et le bord arrière du levier ;
- la pièce de butée est montée de manière réglable sur les deux flasques ; et
- la pièce de butée est montée vissée sur l'extrémité arrière des deux flasques.

D'autres caractéristiques et avantages de l'invention apparaîtront à la lecture de la description détaillée qui va suivre pour la compréhension de laquelle on se reportera au dessin annexé dans lequel :
- La figure 1 est une vue en section partielle selon la ligne 1-1 de la figure 2 d'une pédale de frein de véhicule automobile agencée conformément aux enseignements de l'invention ; et
- la figure 2 est une vue en section selon la ligne 2-2 de la figure 1.

On reconnaît sur les figures une pédale de frein 10 comportant un corps 12 dont l'extrémité supérieure 14 est montée pivotante autour d'un axe fixe 16 de la structure de la caisse du véhicule automobile.

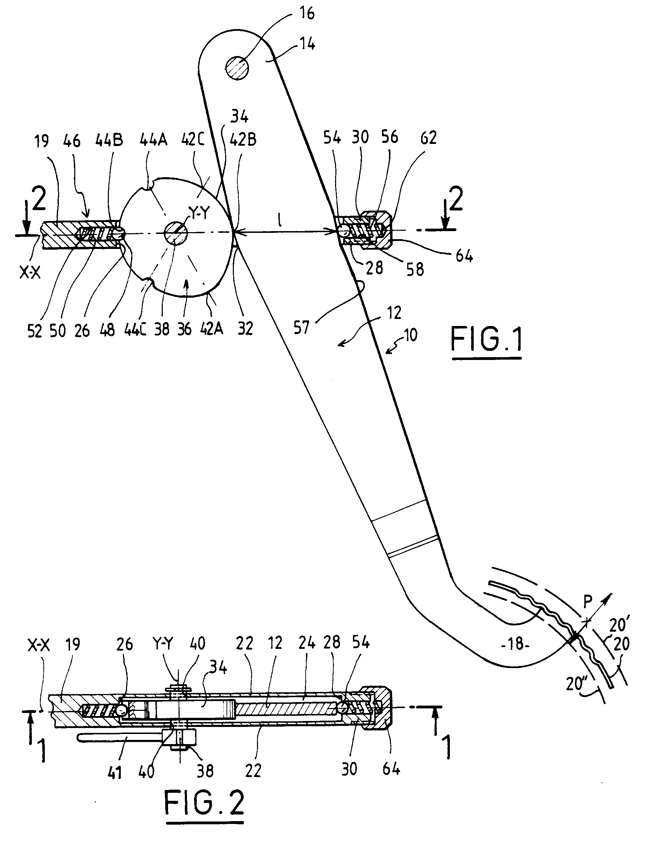

L'extrémité inférieure 18 de la pédale comporte une plaque de poussée 20 qui est agencée à l'intérieur de l'habitacle du véhicule et sur laquelle le conducteur peut agir pour provoquer un pivotement, dans le sens horaire en considérant la figure 1, de la pédale 10 autour de l'axe 16.

La pédale 10 est une pédale de frein permettant d'agir sur un mécanisme de freinage, tel qu'un maître-cylindre ou un amplificateur d'effort de freinage, dont un organe d'entrée 19 est illustré sur les figures.

L'organe d'entrée 19 se présente sous la forme d'une tige d'axe X-X qui correspond à la direction de translation de la tige.

La tige 19 se prolonge axialement par deux flasques latéraux parallèles 22 entre lesquels est reçu le corps 12 de la pédale 10.

Le corps 12 est reçu dans un logement 24 délimité latéralement par les flasques 22 et axialement à l'avant par une face avant d'extrémité 26 correspondant à l'extrémité libre de la tige 19 et à l'arrière par une face arrière 28 d'une pièce 30 de fermeture.

Dans le mode de réalisation illustré sur les figures, la tige 19, les flasques 22 et la pièce de fermeture 30 sont réalisés venus de matière en une seule pièce.

La distance axiale séparant les faces avant 26 et arrière 28 est nettement supérieure à la largeur de la portion médiane du corps 12 reçue entre les flasques 22.

Le bord avant 32 du corps 12 de la pédale 10 coopère avec le contour 34 d'une came de réglage 36 qui est montée tournante autour d'un axe Y-Y transversal et perpendiculaire à l'axe X-X.

A cet effet, la came 36 comporte deux tronçons d'axes 38 qui sont reçus dans des trous 40 formés dans les flasques 22.

L'un des tronçons 38 est équipé d'une manette de commande en rotation 41 de la came 36.

Dans le mode de réalisation illustré sur les figures, le contour 34 de la came 36 comporte trois lobes dont les sommets 42A, 42B et 42C sont situés sur des rayons de longueurs différentes et dont chacun est associé à un cran de réglage 44A à 44C respectivement.

Les crans de réglage permettent d'indexer la came 36 dans l'une des trois positions de réglage au moyen d'un dispositif d'indexation 46.

Le dispositif d'indexation 46 est constitué d'une bille d'indexation 48 qui est sollicitée en appui dans le cran correspondant par un ressort hélicoïdal de compression 50 monté dans un trou borgne 52 formé dans l'extrémité de la tige 19 et qui débouche dans la face avant 26, l'axe du trou étant confondu avec l'axe X-X.

La pièce de fermeture 30 agencée à l'arrière des flasques 22 comporte des moyens pour solliciter élastiquement le bord avant 32 du corps 12 de la pédale 10 en appui contre le contour 34 de la came 36.

Ces moyens sont constitués par une bille 54 qui est interposée entre le bord arrière 57 du corps 12 de la pédale 10 et un ressort hélicoïdal de compression 56 qui est monté dans un trou débouchant 58 de la pièce de fermeture 30.

Une première extrémité axiale du ressort 56 coopère avec la bille 54 tandis que sa seconde extrémité axiale 62 prend appui dans le fond d'un bouchon de fermeture 64 qui est vissé sur la surface externe cylindrique de la pièce de fermeture 30.

On décrira maintenant le mode de réglage et d'utilisation de l'agencement de la pédale 10 qui vient d'être décrit.

L'agencement selon l'invention permet de régler la position de repos, illustrée sur les figures, de la pédale 10 en agissant sur la came de réglage 36.

Dans la position illustrée à la figure 1 dans laquelle le bord avant 32 est en contact avec le sommet 42B du contour 34 de la came 36, la pédale 10 est dans sa position moyenne de repos.

Si le conducteur désire faire "remonter" la plaque 20 dans la position 20', il lui suffit de provoquer la rotation de la came 36, au moyen de la manette 41, dans le sens anti-horaire en considérant la figure 1 de manière à amener la bille d'indexation 48 dans le cran 44A pour provoquer un léger pivotement de la pédale 10 dans le sens anti-horaire autour de l'axe 16 à l'encontre des moyens de rappel élastique 54 et 56.

La position "basse" 20'' s'obtient en amenant le cran 44C en regard de la bille d'indexation 48.

Lorsque le conducteur utilise la pédale 10, l'effort qu'il applique à la plaque 20 est transmis à la tige 19 par l'intermédiaire de la came 36 et des flasques 22.

Le bord avant 32 est en permanence sollicité élastiquement au contact avec le contour 34 de la came 36 ce qui permet de maintenir en contact tous les composants du dispositif dans le sens actif correspondant au sens d'actionnement des freins et de réduire ainsi les bruits parasites et la course morte au début de la phase d'actionnement des freins.

## Revendications

1. Agencement pour l'actionnement d'un mécanisme, appartenant notamment à un système de freinage de véhicule automobile, au moyen d'un levier (10) du deuxième type, notamment au moyen d'une pédale, monté pivotant autour d'un axe fixe (16) et transformant la force motrice appliquée à l'extrémité libre (18, 20) du levier (10) en un mouvement de translation du mécanisme selon une direction (X-X) sensiblement perpendiculaire à l'axe (16) de pivotement du levier (10), la partie médiane du corps (12) du levier (10) étant reçue entre deux flasques (22) reliés à un organe d'entrée (19) du mécanisme, l'agencement comportant de plus des moyens (36) pour régler la position de la surface d'actionnement (34) entre les deux flasques (22) de manière à régler la position de repos du levier (10), caractérisé en ce que la partie médiane du corps (12) du levier coopère par son bord avant (32) avec une surface d'actionnement (34) qui s'étend transversalement entre les flasques (22), en ce que lesdits moyens de réglage comportent une came (36) qui est montée tournante, autour d'un axe transversal (Y-Y) qui s'étend entre les flasques (22), et dont le contour (34) constitue ladite surface d'actionnement, et comportent des moyens d'immobilisation en rotation de la came (36) en position réglée, en ce que le contour (34) de la came (36) comporte une série de crans (44A, 44B, 44C), et en ce que l'organe d'entrée (19) comporte, au voisinage des extrémités avant (26) des deux flasques (22), un dispositif (50, 48) d'indexation dont l'extrémité (48) est susceptible d'être reçue dans un cran pour immobiliser la came (36) en rotation dans la position de réglage associée à ce cran.

2. Agencement selon la revendication 1, caractérisé en ce que le dispositif d'indexation comporte une bille d'indexation (48) sollicitée en appui contre le contour (34) de la came (36) par un ressort de compression (50) monté dans un trou borgne (52) de l'organe d'entrée (19).

3. Agencement selon la revendication 2, caractérisé en ce que l'axe du trou borgne (52) est sensiblement parallèle à la direction (X-X) de translation de l'organe d'entrée (19).

4. Agencement selon l'une quelconque des revendications précédentes, caractérisé en ce qu'il comporte des moyens pour solliciter élastiquement le bord avant (32) du corps (12) du levier (10) en appui contre la surface d'actionnement (34).

5. Agencement selon la revendication 4, caractérisé en ce que lesdits moyens de sollicitation du levier (12) comportent un ressort de compression (56) dont une première extrémité coopère avec la portion en vis-à-vis (57) du bord arrière du levier (10) et dont la seconde extrémité (62) prend appui contre une pièce de butée (64) reliée aux deux flasques (22).

6. Agencement selon la revendication 5, caractérisé en ce qu'une bille (54) est interposée entre la première extrémité du ressort (56) et le bord arrière (57) du levier (10).

7. Agencement selon l'une des revendications 5 ou 6, caractérisé en ce que ladite pièce de butée (64) est montée de manière réglable sur les deux flasques (22).

8. Agencement selon la revendication 7, caractérisé en ce que ladite pièce de butée (64) est montée vissée à l'extrémité arrière des deux flasques (22).

## Claims

1. An arrangement for the operation of a mechanism, forming in particular part of a motor vehicle braking system, by means of a second-class lever (10), in particular by means of a pedal, pivotably mounted around a fixed pin (16) and converting the moving force applied to the free end (18, 20) of the lever (10) into a translational motion of the mechanism in a direction (X-X) substantially perpendicular to the pin (16) on which the lever (10) pivots, the central portion of the body (12) of the lever (10) being accommodated between two flanges (22) connected to an input device (19) of the mechanism, the arrangement also comprising means (36) for controlling the position of the operating surface (34) between the two flanges (22) in order to set the starting position of the lever (10) characterised in that the central portion of the body (12) of the lever cooperates by its forward edge (32) with an operating surface (34) which extends transversally between the flanges (22), in that the said control means comprise a cam (36), which is rotatably mounted around a transverse axis (Y-Y) extending between the flanges (22), the circumference (34) of which cam forms the said operating surface, and they also comprise means of locking the rotating cam (36) in a set position, in that the circumference (34) of the cam (36) comprises a series of notches (44A, 44B, 44C), and in that, near the forward ends (26) of the two flanges (22), the input device (19) comprises indexing apparatus (50, 48), the end (48) of which can be accommodated in a notch to stop the rotating cam (36) in the control position associated with said notch.

2. An arrangement as claimed in claim 1, characterised in that the indexing apparatus comprises an indexing ball (48) loaded so as to bear against the circumference (34) of the cam (36) by means of a pressure spring (50) mounted in a blind hole (52) of the input device (19).

3. An arrangement as claimed in claim 2, characterised in that the axis of the blind hole (52) is substantially parallel to the direction (X-X) of travel of the input device (19).

4. An arrangement as claimed in any one of the preceding claims, characterised in that it comprises means for flexibly loading the forward edge (32) of the body (12) of the lever (10) to bear against the operating surface (34).

5. An arrangement as claimed in claim 4, characterised in that the said means of loading the lever (12) comprise a pressure spring (56), a first end of which co-operates with the facing portion (57) of the rearward edge of the lever (10) and the second end of which (62) bears against a stop piece (64) connected to the two flanges (22).

6. An arrangement as claimed in claim 5, characterised in that a ball (54) is inserted between the first end of the spring (56) and the rearward edge (57) of the lever (10).

7. An arrangement as claimed in one of claims 5 or 6, characterised in that the said stop piece (64) is mounted in an adjustable manner on the two flanges (22).

8. An arrangement as claimed in claim 7, characterised in that the said stop piece (64) is mounted by being screwed to the rearward end of the two flanges (22).

## Patentansprüche

1. Anordnung zur Betätigung eines Mechanismus, der insbesondere zu einem Kraftfahrzeug-Bremssystem gehört, mittels eines einarmigen Hebels (10), insbesondere mittels eines Pedals, der um eine feststehende Achse (16) schwenkbar montiert ist und die auf das freie Ende (18, 20) des Hebels (10) ausgeübte Antriebskraft in eine Translstionsbewegung des Mechanismus entlang einer zur Schwenkachse (16) des Hebels (10) im wesentlichen senkrechten Richtung (X-X) umwandelt, wobei der mittlere Teil des Körpers (12) des Hebels (10) zwischen zwei Flanschen (22) aufgenommen wird, die mit einem Eingangsteil (19) des Mechanismus verbunden sind, wobei die Anordnung außerdem Mittel (36) zum Einstellen der Position der Betätigungsfläche (34) zwischen den beiden Flanschen (22) aufweist, um die Ruhelage des Hebels (10) einzustellen, dadurch gekennzeichnet, daß der mittlere Teil des Körpers (12) des Hebels mit seiner Vorderkante (32) mit einer Betätigungsfläche (34) zusammenwirkt, die sich quer zwischen den Flanschen (22) erstreckt, daß die Einstellmittel einen Nocken (36), der um eine sich zwischen den Flanschen (22) erstreckende Querachse (Y-Y) drehbar montiert ist und dessen Kontur (34) die Betätigungsfläche bildet, und Mittel zur Arretierung des Nockens (36) hinsichtlich der Drehung in der eingestellten Position umfassen, daß die Kontur (34) des Nockens (36) eine Reihe von Rastkerben (44A, 44B, 44C) aufweist und daß das Eingangsteil (19) nahe den vorderen Enden (26) der beiden Flansche (22) eine Vorrichtung (50, 48) zum Verrasten aufweist, deren Ende (48) in eine Rastkerbe zum Arretieren des Nockens (36) hinsichtlich der Drehung in der dieser Rastkerbe zugeordneten Einstellposition aufgenommen werden kann.

2. Anordnung nach Anspruch 1, dadurch gekennzeichnet, daß die Vorrichtung zum Verrasten eine Rastkugel (48) aufweist, die durch eine Druckfeder (50), weiche in einer Blindbohrung (52) des Eingangsteils (19) montiert ist, gegen die Kontur (34) des Nockens (36) gespannt wird.

3. Anordnung nach Anspruch 2, dadurch gekennzeichnet, daß die Achse der Blindbohrung (52) im wesentlichen parallel zur Translationsrichtung (X-X) des Eingangsteils (19) ist.

4. Anordnung nach einem der vorhergehenden Ansprüche, dadurch gekennzeichnet, daß sie Mittel zum elastischen Spannen der Vorderkante (32) des Körpers (12) des Hebels (10) gegen die Betätigungsfläche (34) aufweist.

5. Anordnung nach Anspruch 4, dadurch gekennzeichnet, daß die Mittel zum Spannen des Hebels (12) eine Druckfeder (56) umfassen, von der ein erstes Ende mit dem gegenüberliegenden Teil (57) der Hinterkante des Hebels (10) zusammenwirkt und deren zweites Ende (62) sich gegen ein Drucklagerteil (64) abstützt, das mit den zwei Flanschen (22) verbunden ist.

6. Anordnung nach Anspruch 5, dadurch gekennzeichnet, daß eine Kugel (54) zwischen dem ersten Ende der Feder (56) und der Hinterkante (57) des Hebels (10) eingefügt ist.

7. Anordnung nach einem der Ansprüche 5 oder 6, dadurch gekennzeichnet, daß das Drucklagerteil (64) einstellbar auf den beiden Flanschen (22) montiert ist.

8. Anordnung nach Anspruch 7, dadurch gekennzeichnet, daß das Drucklagerteil (64) auf das hintere Ende der beiden Flansche (22) aufgeschraubt ist.
